# EUROPÄISCHE PATENTANMELDUNG

(11) **EP 1 520 647 A1**
(43) Veröffentlichungstag der Anmeldung: **06.04.2005**
(21) Anmeldenummer: 04023447.8
(22) Anmeldetag: 01.10.2004
(51) Int. Cl.: B23B 5/16, B23K 11/30

(54) **Elektrodenfräskopf und Flankenfräsmesser**

(30) Priorität: 04.10.2003 DE 20315288 U
(71) Anmelder: AEG SVS Schweisstechnik GmbH, 45475 Mülheim/Ruhr (DE)
(72) Erfinder: Busch, Josef, 59555 Lippstadt (DE); Dahl, Thomas, 40667 Meerbusch (DE); Durchschlag, Peter, 45481 Mülheim/Ruhr (DE)
(74) Vertreter: Schumacher, Horst, Dr. Dipl.-Phys.

(57) **Zusammenfassung**

Ein Elektrodenfräskopf (1) mit mindestens einer darin ausgebildeten, Stützflächen (6, 6') aufweisenden Elektrodenkappenaufnahme (4, 4') umfasst ein Oberteil (2), ein Unterteil (3) und mindestens ein zwischen Ober- und Unterteil (2, 3) klemmend gehaltenes, in die mindestens eine Elektrodenaufnahme (4, 4') hineinragendes und mindestens eine Flankenschneide aufweisendes Flankenfräsmesser (9). Um Elektrodenspitzen oder Elektrodenkappen mit verbesserter Einsatzfähigkeit herstellen und/oder wiederaufarbeiten zu können, wird vorgeschlagen,
dass die mindestens eine Flankenschneide eine Anfasschneidkante (10, 10') mit einer zum äußeren Rand der Aufnahme (4, 4') ansteigenden Neigung (β) von 20° ausbildet ist.

## Beschreibung

Die Erfindung richtet sich auf einen Elektrodenfräskopf mit mindestens einer darin ausgebildeten, Stützflächen aufweisenden Elektrodenkappenaufnahme umfassend ein Oberteil, ein Unterteil und mindestens ein zwischen Ober- und Unterteil klemmend gehaltenes, in die mindestens eine Elektrodenaufnahme hineinragendes und mindestens eine Flankenschneide aufweisendes Flankenfräsmesser. Weiterhin richtet sich die Erfindung auf ein Flankenfräsmesser, das in einem Elektrodenfräskopf, der mindestens eine Elektrodenkappenaufnahme mit mindestens einer darin ausgebildeten Stützfläche aufweist, zwischen einem Oberteil und einem Unterteil klemmend gehalten derart anordenbar ist, dass mindestens eine Flankenschneide des Flankenfräsmessers in die mindestens eine Elektrodenkappenaufnahme hineinragt.

Bei dem zu den Widerstandsschweißverfahren zählenden Punkt- oder Kontaktschweißen werden Elektroden oder Elektrodenkappen verwendet, deren Spitze zur Gewährleistung eines einwandfreien Schweißvorganges zu einer planen bzw. ebenen Spitzenfläche ausgeformt sein muss. Zur Bearbeitung der Elektrodenspitzen bzw. Elektrodenkappen werden Elektrodenfräsköpfe verwendet. Diese weisen Messer bzw. Schneidkanten auf, mit denen die Elektrodenspitzen bzw. Elektrodenkappen in die gewünschte Oberflächenform gebracht werden. Nach mehreren Schweißvorgängen abgenutzte Elektrodenspitzen oder Elektrodenkappen werden in derartigen Elektrodenfräsköpfen für einen erneuten Einsatz wieder aufgearbeitet und angefast. Aus der GB-B-984 610 ist ein Fräskopf bekannt, der eine Elektrodenkappenaufnahme umfasst, in die radial zwei Flankenfräsmesser eingeführt werden. Jedes Flankenfräsmesser weist eine kurvenförmig ausgebildete Flankenschneide auf, so dass von der Zylinderaußenfläche der Elektrode ausgehend zur Spitze der Elektrode hin ein domartig gewölbter, abgerundeter Flankenbereich an der Elektrode ausgebildet wird.

Ein Elektrodenfräskopf mit gerade verlaufenden Flankenschneiden eines Flankenfräsmessers ist aus der DE-U-88 16 328 bekannt. Bei diesem Elektrodenfräskopf wird das Flankenfräsmesser durch einen Schlitz in die Aufnahme gesteckt und dort rotationssymmetrisch zur Rotationsachse des Fräskopfes positioniert. Die Flankenschneide weist bei diesem bekannten Flankenfräsmesser eine zum Rand der Aufnahme hin ansteigende Neigung von 45° auf. Bei einer mit diesem Fräskopf bearbeiteten Elektrode oder Elektrodenkappe wird damit ein kegelstumpfförmiger Flankenbereich an der Elektrode mit einer Steigung von 45° ausgebildet.

Die DE 42 13 571 C2 offenbart ein Elektrodenspitzen-Abrichtgerät sowie ein Schneidwerkzeug für dieses, bei dem das Schneidewerkzeug aus einer Vielzahl von Messern besteht, die von einer kreisförmigen Grundplatte senkrecht abstehen. Abstützflächen für die Elektrodenspitze sind nicht vorgesehen. Die seitliche Elektrodenführung besorgt ein Loch in einer eigenständigen Führungsplatte oberhalb des Schneidewerkzeuges. Die zum Bearbeiten des vorderen Umfangs der Elektrodenspitze vorgesehenen Messer sind mit einem Winkel von etwa 35° bis 45° angeordnet. Zum Bearbeiten einer Arbeitsfläche der Elektrodenspitze ist ein weiteres Messer angeordnet, das flach verläuft, also einen Winkel von 0° aufweist.

Ein gattungsgemäßer Elektrodenfräskopf und ein gattungsgemäßes Flankenfräsmesser sind aus der EP-A-0 581 316 bekannt. Dieser Stand der Technik zeigt einen Elektrodenfräskopf mit einer Elektrodenkappenaufnahme, in die eine Elektrodenspitze zur Bearbeitung eingeführt wird, wobei in der Elektrodenkappenaufnahme Stützflächen für die Elektrodenspitze ausgebildet sind. Die Elektrodenkappenaufnahme ist als Halter ausgebildet und zwischen einem Oberteil und einem Unterteil des Elektrodenfräskopfes rotierbar festgelegt. An dem Halter ist ein Flankenfräsmesser befestigt, das mit seiner Flankenschneide in die Elektrodenkappenaufnahme hineinragt. Die Flankenschneide des Flankenfräsmessers ist geradlinig linear verlaufend ausgebildet und weist eine in Bezug auf eine zur Rotationsachse senkrechten Ebene zum Rand der Aufnahme hin mit einer Neigung von 30° ansteigenden Verlauf auf. Betrachtet man das aus der EP-A-0 581 316 bekannte dreieckförmige Flankenfräsmesser alleine, so beträgt die Neigung der Flankenschneide 30° bezogen auf eine durch die an die Flankenschneide angrenzende Spitze verlaufende Messerlängsachse.

Außerdem sind gattungsgemäße Elektrodenfräsköpfe und Flankenfräsmesser in vielfältiger Weise aus der Praxis bekannt.

Trotz vielfältiger Entwicklungen auf diesem Technikgebiet sind die Standzeiten der Elektrodenspitzen bzw. Elektrodenkappen immer noch nicht zufriedenstellend. Trotz der beim Stand der Technik unterschiedlich ausgeprägten Neigungen der Flankenbereiche (gerundet nach der GB-Schrift, mit einer Steigung von 45° nach der DE-Schrift und einer Steigung von 30° nach der EP-Schrift) kommt es bei der Anwendung der bearbeiteten Elektrodenkappen beim Schweißvorgang immer noch relativ bald zu einer Deformation der über den Flankenbereich sich hinaus erstreckenden eigentlichen Elektrodenkappenspitze, insbesondere des eigentlichen Kontaktpunktes. Dies geht einher mit einer Deformation des angefasten Flankenbereiches.

Demgegenüber liegt der Erfindung die Aufgabe zugrunde, eine Lösung zu schaffen, mit der Elektrodenspitzen bzw. Elektrodenkappen mit verbesserter Einsatzfähigkeit herstellbar und/oder wiederaufarbeitbar sind.

Bei einem Elektrodenfräskopf der eingangs bezeichneten Art wird diese Aufgabe erfindungsgemäß dadurch gelöst, dass die mindestens eine Flankenschneide eine Anfasschneidkante mit einer zum äußeren Rand der Aufnahme ansteigenden Neigung von 20° ausbildet.

Hierdurch wird erreicht, dass eine mit diesem Fräskopf bearbeitete Elektrodenspitze oder Elektrodenkappe einen umlaufenden Flankenbereich aufweist, der gegenüber der Elektrodenlängsachse bzw. der Elektrodenkappenlängsachse eine Neigung von 70° und in Bezug auf eine dazu senkrechte Fläche eine Neigung von 20° aufweist. Durch eine dermaßen geneigte Flankenfläche wird die Deformation an der Spitze der Elektrode bzw. der Elektrodenkappe deutlich verringert. Ein solcher Flankenbereich ist stabiler als ein solcher mit einer steileren Neigung, so dass insgesamt der Deformationsgrad der Elektrodenspitze bzw. der Elektrodenkappenspitze mit Hilfe der Erfindung verbessert wird. Durch die erhöhte Deformationsstabilität wird der Verschleiß der Elektrodenkappenspitze bzw. Elektrodenspitze insgesamt verringert und die Lebensdauer einer mit dem erfindungsgemäßen Elektrodenfräskopf hergestellten oder wiederaufgearbeiteten Elektrodenspitze bzw. Elektrodenkappenspitze verlängert.

Dieselben Vorteile sind mit dem erfindungsgemäßen Flankenfräsmesser verbunden. Hierbei wird die Aufgabe bei einem Flankenfräsmesser der eingangs bezeichneten Art erfindungsgemäß dadurch gelöst, dass das Flankenfräsmesser mindestens eine Anfasschneidkante aufweist, die von einem schneidaktiven Anfangspunkt zu einem Endbereich mit einer ansteigenden Neigung von 20° zur Flankenfräsmesserlängsachse verläuft.

In zweckmäßiger Ausgestaltung des Elektrodenfräskopfes sieht die Erfindung vor, dass die mindestens eine Anfasschneidkante an einem schneidaktiven Anfangspunkt beginnend linear gerade mit zum äußeren Rand der Elektrodenkappenaufnahme ansteigender Neigung von 20° verläuft.

Um eine exakte Bearbeitung der Elektrodenspitze bzw. Elektrodenkappenspitze zu erzielen, sieht die Erfindung in vorteilhafter Ausgestaltung weiterhin vor, dass an dem Elektrodenfräskopf mehrere Anfasschneidkanten bezüglich einer Ebene parallel zur Rotationsachse des Elektrodenfräskopfes oder einer Elektrode oder Elektrodenkappe und/oder bezüglich einer Ebene senkrecht zur Rotationsachse des Elektrodenfräskopfes oder einer Elektrode oder Elektrodenkappe spiegelsymmetrisch zueinander ausgebildet sind. Es können somit eine Vielzahl von Anfasschneidkanten vorgesehen sein, die in jeweils eine Elektrodenkappenaufnahme hineinragen. Wie aus dem Ausführungsbeispiel ersichtlich ist, kann der Elektrodenfräskopf zwei Elektrodenkappenaufnahmen aufweisen, die übereinander angeordnet sind und in die von jeweils einer Seite gegenläufig zueinander eine Elektrodenspitze bzw. Elektrodenkappe zur Bearbeitung eingeführt wird. Dabei ragt in jede Aufnahme mindestens eine Anfasschneidkante hinein. Bei im Querschnitt im wesentlichen dreiecksförmiger Ausbildung eines Flankenfräsmessers kann nun jeweils eine Seite des Flankenfräsmessers als Anfasschneidkante ausgebildet sein und dann in die obere oder untere Aufnahme hineinragen. Es ist aber auch möglich, dass beide Längsseiten eines Flankenfräsmessers als Anfasschneidkante ausgebildet sind, so dass ein solches Flankenfräsmesser in beiden Aufnahme Schneidarbeit verrichten kann.

Die Erfindung sieht daher in Weiterbildung vor, dass an einem Flankenfräsmesser zwei Anfasschneidkanten bezüglich einer Ebene senkrecht zur Rotationsachse des Elektrodenfräskopfes oder einer Elektrode oder Elektrodenkappe symmetrisch zueinander ausgebildet sind.

Ebenso kann vorgesehen sein, dass mehrere Flankenfräsmesser mit jeweils mindestens einer Anfasschneidkante an dem Elektrodenfräskopf angeordnet sind, wobei mindestens eine Anfasschneidkante der oberen Elektrodenkappenaufnahme und mindestens eine Anfasschneidkante der unteren Elektrodenkappenaufnahme zugewandt ist.

Um die Flankenflächen an der Elektrodenspitze bzw. Elektrodenkappe exakt und sauber ausbilden zu können, sieht die Erfindung weiterhin vor, dass die Neigungen der mindestens einen Anfasschneidkante und der Stützfläche der zugeordneten Elektrodenkappenaufnahme die gleiche Steigung aufweisen.

In vorteilhafter Ausgestaltung sieht die Erfindung vor, dass der Elektrodenfräskopf einen Fräsbalken aufweist und mindestens ein Flankenfräsmesser fluchtend in dessen Längsrichtung angeordnet ist. Ebenso kann es gemäß Ausgestaltung der Erfindung der Fall sein, dass ein Fräsbalken und mindestens ein Flankenfräsmesser senkrecht zueinander angeordnet sind.

Eine besonders günstige Herstellung des Elektrodenfräskopfes lässt sich dann erreichen, wenn mindestens ein Flankenfräsmesser einteilig mit dem Fräsbalken ausgebildet ist, was die Erfindung ebenfalls vorsieht.

Eine besonders gute Bearbeitung der Elektrodenspitze bzw. der Elektrodenkappenspitze und ein besonders guter Übergang von der Spitzenfläche der damit hergestellten Elektrode zu dem erfindungsgemäß geneigten Flankenbereich lässt sich dann herstellen, wenn der Fräsbalken mindestens eine in seiner seinen Hauptschneidkanten abgewandten Seitenfläche ausgebildete Kerbe aufweist, in die die Spitze mindestens eines oder des mindestens einen Flankenfräsmessers einführbar ist, was die Erfindung in Ausgestaltung vorsieht.

Hierbei ist die Kerbe zweckmäßigerweise derart ausgebildet, dass die Spitze eines Flankenfräsmessers bis zur formschlüssigen Anlage an die Seitenflächen der Kerbe in diese einführbar ist.

Die Erfindung sieht weiterhin die Möglichkeit vor, die Erstreckung des angefasten Flankenbereiches einer Elektrodenspitze bzw. einer Elektrodenkappenspitze und damit den Durchmesser der Elektrodenspitze variierbar gestalten zu können. Hierzu sieht die Erfindung in Ausgestaltung vor, dass mindestens ein Flankenfräsmesser radial unterschiedlich, jeweils einen anderen radialen Abstand des oder der schneidaktiven Anfangspunkte(s) zur Rotationsachse des Elektrodenfräskopfes oder einer Elektrode oder Elektrodenkappe einstellend, an dem Elektrodenfräskopf positionierbar ist.

Um die Ausbildung eines exakten und sauberen Übergangs von dem angefasten Flankenbereich zur eigentlichen Spitze einer bearbeiteten Elektrodenspitze oder Elektrodenkappe zu erreichen, ist es von Vorteil, wenn der jeweilige schneidaktive Anfangspunkt eines Flankenfräsmessers und der höchste Punkt der jeweiligen zugeordneten Hauptschneide eines Fräsbalkens in einer senkrecht zur Rotationsachse des Elektrodenfräskopfes oder einer Elektrode oder Elektrodenkappe aufgespannten Ebene liegen, was die Erfindung weiterhin vorsieht.

Eine zweckmäßige Ausgestaltung des erfindungsgemäßen Flankenfräsmessers ist dadurch gekennzeichnet, dass die mindestens eine Anfasschneidkante an einem schneidaktiven Anfangspunkt beginnend linear gerade mit zum entgegengesetzten Ende des Flankenfräsmessers ansteigender Neigung von 20° verläuft.

Weiterhin sieht die Erfindung in zweckmäßiger Ausgestaltung vor, dass an einem Flankenfräsmesser zwei Anfasschneidkanten bezüglich der Flankenfräsmesserlängsachse spiegelsymmetrisch zueinander ausgebildet sind.

In besonders zweckmäßiger Ausgestaltung ist die Erfindung schließlich dadurch gekennzeichnet, dass das Flankenfräsmesser einteilig mit einem Fräsbalken ausgebildet ist.

Die Erfindung ist nachstehend anhand der Zeichnung beispielhaft näher erläutert. Diese zeigt in
- Fig. 1: einen Elektrodenfräskopf mit Flankenfräsmesser und Fräsbalken in Querschnittsdarstellung;
- Fig. 2: eine schematische Aufsicht auf den Elektrodenfräskopf nach Fig. 1;
- Fig. 3: eine schematischen Seitenansicht einer Elektrodenkappe;
- Fig. 4: eine Seitenansicht eines Flankenfräsmessers und in
- Fig. 5: einen Fräsbalken in perspektivischer Darstellung.

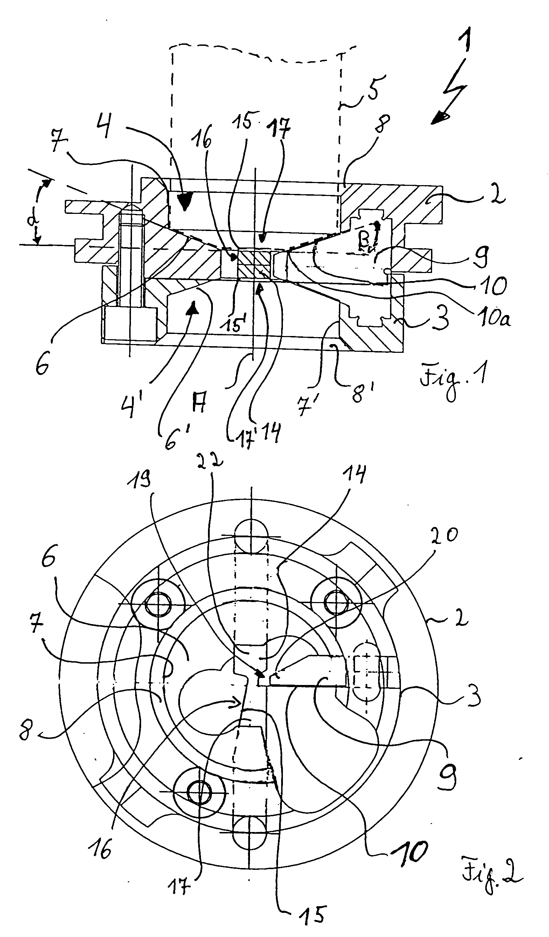

Der in Fig. 1 insgesamt mit 1 bezeichnete Elektrodenfräskopf besteht aus einem Oberteil 2 und einem Unterteil 3. In dem Oberteil 3 ist eine (in der Darstellung der Fig. 1 "obere") Elektrodenkappenaufnahme 4 ausgebildet. Der Elektrodenfräskopf 1 ist im wesentlichen zylinderförmig und in der Aufsicht kreisförmig ausgebildet, so dass die Achse A die Längsachse des Elektrodenfräskopfes 1 und auch die Mittellängsachse der Elektrodenkappenaufnahme 4 darstellt. Da in der Elektrodenkappenaufnahme 4 mittels des Elektrodenfräskopfes 1 die Spitze einer Elektrodenkappe 5 bzw. die Spitze einer Schweißelektrode durch Rotation des Elektrodenfräskopfes für den Betrieb beim Punkt- bzw. Widerstandsschweißen ausgeformt, d. h. angefast und angespitzt werden soll, bildet die Achse A auch die Rotationsachse des Elektrodenfräskopfes 1. In einem dem halben Durchmesser D₁ der Spitzenfläche 11 der Elektrodenkappe 5 entsprechenden Abstand von der Rotations- oder Mittelachse A beginnend ist in der Aufnahme 4 eine zum äußeren Rand der Aufnahme 4 hin ansteigende Stützfläche 6 ausgebildet. Diese Stützfläche 6 ist umlaufend in Teilbereichen der Aufnahme 4 ausgebildet. Die Stützfläche 6 weist eine Steigung in einem Winkel α von 20° auf. An die Stützfläche 6 schließt sich eine ebenfalls über den größten Teil der Aufnahme 4 umlaufend ausgebildete zylindrische Führungsfläche 7 an, die sich parallel zur Achse A erstreckt. Den oberen Abschluss der Aufnahme 4 bildet eine ebenfalls über wesentliche Teile der Aufnahme 4 umlaufende, geneigt ausgebildete Einführfläche 8. Der Durchmesser der Aufnahme 4 im Bereich gegenüberliegender Abschnitte der Führungsfläche 7 ist geringfügig größer als der Außendurchmesser D₂ der Elektrodenkappe 5. In die Aufnahme 4 wird die Elektrodenkappe 5 zur Bearbeitung durch den rotierenden Elektrodenfräskopf 1 eingeführt. Hierbei stützt sich die Spitze der Elektrodenkappe 5 auf der Stützfläche 6 ab und sind die Seitenflächen der Elektrodenkappe 5 durch die Führungsfläche 7 während des Bearbeitungsvorganges in ihrer Lage orientiert.

In die Aufnahme 4 ragt radial ein Flankenfräsmesser 9 hinein. Das Flankenfräsmesser 9 weist auf seiner der Aufnahme 4 zugewandten Seite eine Anfasschneidkante 10 auf. Das Flankenfräsmesser 9 ist zwischen dem Oberteil 2 und dem Unterteil 3 gefasst und fixiert gehalten. Es ragt soweit in die Aufnahme 4 hinein, dass der schneidaktive Anfangspunkt 10a denselben Abstand (die Hälfte des Durchmessers D₁ der Spitzenfläche 11 der Elektrodenkappe 5) von der Achse A aufweist wie der kappeninnenseitige Beginn der Stützfläche 6. Ebenso liegt der schneidaktive Anfangspunkt 10a der Anfasschneidkante 10 auf derselben Höhe und damit in derselben Ebene wie der innenseitige Anfangspunkt bzw. die Anfangskante der Stützfläche 6. Die Anfasschneidkante 10 verläuft vom schneidaktiven Anfangspunkt 10a an in einer etwa dem halben Durchmesser der Aufnahme 4, also etwas mehr als dem halben Außendurchmesser D₂ der Elektrodenkappe 5 entsprechenden linearen Länge in einem Winkel β von 20° von der Innenseite der Aufnahme 4 zu dem an dem Flankenfräsmesser 9 angrenzenden Abschnitt der Führungsfläche 7 hin ansteigend. Bezüglich der Flankenfräsmesserlängsachse B liegt ebenfalls eine Neigung im Winkel β von 20° vor. Dies führt dazu, dass der sich zwischen der den Durchmesser D₁ aufweisenden Spitzenfläche 11 der Elektrodenkappe 5 und der den Außendurchmesser D₂ aufweisenden Zylinderfläche 12 der Elektrodenkappe 5 kreisringförmig erstreckende Flankenbereich 13 der Elektrodenkappe 5 eine Anfasung bzw. eine Neigung von 20° aufweist.

Eine zu der Elektrodenkappenaufnahme 4 analog ausgebildete, in der Schnittdarstellung spiegelbildliche und in Bezug auf die für die Elektrodenkappenbearbeitung wesentlichen Flächen gleichförmig ausgebildete (in der Darstellung der Fig. 1 "untere") Elektrodenkappenaufnahme 4' ist bei dem Ausbildungsbeispiel auch in dem Unterteil 3 ausgebildet. Die zu der Aufnahme 4 identischen Elemente sind bis auf die Kennzeichnung durch einen Hochstrich mit denselben Bezugsziffern versehen. Ebenso ist das Flankenfräsmesser 9 in bezug auf seine Anfasschneidkante 10 und den schneidaktiven Anfangspunkt 10a der Schneidkante spiegelsymmetrisch aufgebaut. Die spiegelsymmetrische Schneidkante ist mit 10' und der dazu gehörige schneidaktive Anfangspunkt mit 10a' bezeichnet.

Die an dem Flankenfräsmesser 9 ausgebildeten Anfasschneidkanten 10 und 10' sind spiegelsymmetrisch zueinander bezüglich der Flankenfräsmesserlängsachse B ausgebildet und weisen die Steigungen β=β'=20° bezüglich der Achse B auf. Im in den Elektrodenfräskopf 1 eingebauten Zustand liegt diese Flankenfräsmesserlängsachse B in einer senkrecht zur Rotationsachse A aufgespannten Ebene.

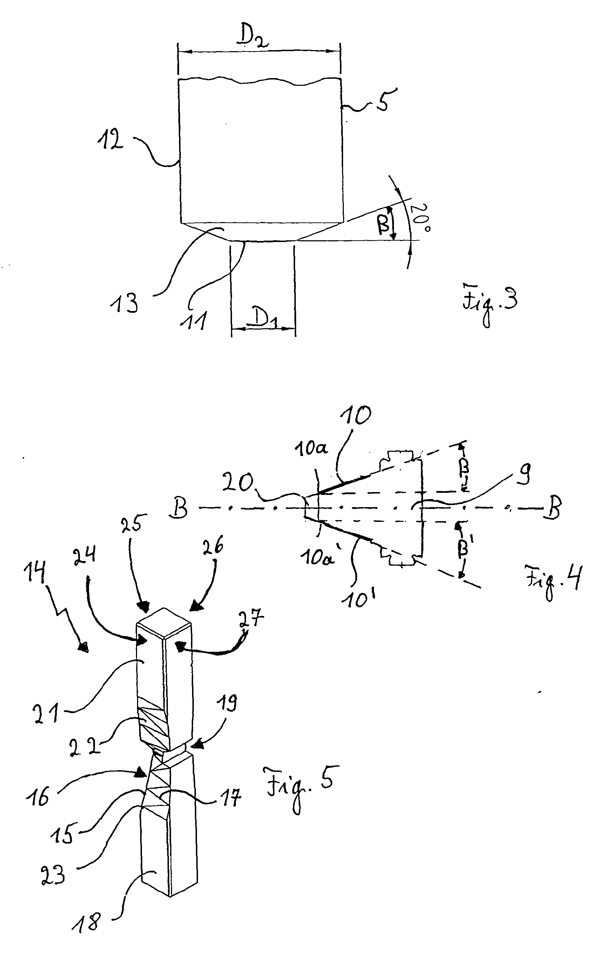

Mit den Elementen 10' und 10a' ragt das Flankenfräsmesser in die Aufnahme 4' hinein, so dass eine dort eingeführte Elektrodenkappe 5 dieselbe Bearbeitung wie in einer Aufnahme 4 erfährt und anschließend dieselben Dimensionen wie die in der Fig. 3 dargestellte Elektrodenkappe 5 aufweist.

Weiterhin ist in dem Elektrodenfräskopf ein zwischen Oberteil 2 und Unterteil 3 fixiert und klemmend gehaltener Fräsbalken 14 angeordnet. Der Fräsbalken 14 weist vier rechtwinklig zueinander angeordnete Fräsbalkenseitenflächen 24, 25, 26, 27 auf und ist dabei so positioniert, dass er mit seinen Hauptschneiden 15 und 15' den Grundbereich der Aufnahmen 4 und 4' überstreicht und bei in die Aufnahmen eingesetzter Elektrodenkappe 5 deren jeweilige Spitzenfläche 11 bearbeitet und ausformt. Die Rotationsachse A geht somit durch den Fräsbalken 14. Bei dem Fräsbalken 14 handelt es sich um einen länglichen Körper mit einem die Hauptschneiden 15 und 15' aufweisenden Schneidteil. Die zwischen den beiden Hauptschneiden 15 und 15' aufgespannte Fläche ist die Spanfläche 16 des Schneidteiles bzw. Fräsbalkens 14. Weiterhin weist der Schneidteil des Fräsbalkens 14 eine sich von der Hauptschneide 15 fort erstrekkende erste Freifläche 17 und eine sich von der zweiten Hauptschneide 15' fort erstrekkende zweite Freifläche 17' auf. Die erste Hauptschneide 15 wird somit von der Kante der einander angrenzenden Spanfläche 16 und ersten Freifläche 17 gebildet und die zweite Hauptschneide 15' wird von der Kante der aneinander grenzenden Spanfläche 16 und zweiten Freifläche 17' gebildet. Die erste Freifläche 17 und die zweite Freifläche 17' sind an dem Fräsbalken 14 somit diametral gegenüberliegend ausgebildet. Die erste und zweite Freifläche 17, 17' sind in Bezug auf die ebenen, angrenzenden Schneidelementflächen (Schneidelementfläche 18 in Fig. 5 grenzt an erste Freifläche 17 an) auf die Längsachse des Schneidelementes bzw. Fräsbalkens 14 zu gebogen, beispielsweise mit einem Radius R50, ausgebildet. Einen entsprechend bogenförmigen Verlauf weisen daher auch die Hauptschneiden 15 und 15' auf, da die Spanfläche 16 zwar ebenfalls auf die Fräsbalkenlängsachse zu geneigt ausgebildet ist, aber einen linearen und geradlinigen Verlauf aufweist, so dass die Freifläche 16 plan ausgebildet ist. Der in den Hauptschneiden 15 und 15' ausgebildete Radius findet sich in der Spitzenfläche 11 der Elektrodenkappe 5 wieder. Bei querschnittlicher Darstellung der Elektrodenkappe 5 ist die zwischen dem Durchmesser D₁ befindliche Strecke mit einem identischen Radius versehen. Insgesamt führt dies aufgrund der Rotationsbewegung des Fräskopfes 1 zu einer gewölbten Spitze 11 der Elektrodenkappe 5 im Bereich des Durchmessers D₁.

Die erste Freifläche 17 und zweite Freifläche 17' sind darüber hinaus von den Hauptschneiden 15, 15' ausgehend auf die jeweils gegenüberliegende Seite abfallend mit einer Neigung von 1 bis 5° gegenüber der Ebene der Schneidelementflächen 18 und 21 ausgebildet.

In der der Spanfläche 16 gegenüberliegenden Seitenfläche des Fräsbalkens 14 ist eine kerbenförmige Ausnehmung oder Kerbe 19 ausgebildet. Wie insbesondere aus der Fig. 2 ersichtlich ist, ist diese Kerbe 19 in ihrer geometrischen Ausformung so ausgelegt, dass die Spitze 20 des Flankenfräsmessers 9 in diese Kerbe eingeführt und gewünschtenfalls formschlüssig darin zur Anlage gebracht werden kann. Hiermit ist es möglich, die schneidaktiven Anfangspunkte 10a, 10a' der Anfasschneidkanten 10 und 10' in Bezug auf die Rotationsachse A radial variierbar anzuordnen (zu verschieben) und damit die Ausprägung, d. h. die Breite der Flankenfläche 13 und den Durchmesser D₁ der Spitzenfläche 11 der Elektrodenkappe 5 zu variieren. Je näher der aktive Anfangspunkt 10a, 10a' an der Rotationsachse A angeordnet ist, umso kleiner ist der Durchmesser D₁ und umso größer ist die Breite/Erstreckung der Flankenfläche 13 an der Spitze der jeweils bearbeiteten Elektrodenkappe 5 ausgebildet.

Der jeweilige schneidaktive Anfangspunkt 10a, 10a' und der höchste Punkt 23 der jeweils zugeordneten Hauptschneide 15, 15' liegen in einer senkrecht zur Rotationsachse A aufgespannten Ebene.

Gegenüberliegend bzw. in Richtung auf die Schneidelementfläche 21 zu angrenzend an die erste Freifläche 17 ist auf dem Fräsbalken 14 eine Stütz- und Führungsfläche 22 ausgebildet. Auf dieser Fläche stützt sich der durch den Fräsbalken zu bearbeitende Bereich von Spitzenfläche 11 und Flankenfläche 13 der jeweils in die Aufnahme 4 bzw. 4' eingeführten Elektrodenkappe 5 während der Bearbeitung ab. Die Stütz- und Führungsfläche 22 ist mit demselben Radius auf die Fräsbalkenlängsachse zu gebogen ausgebildet, beispielsweise mit einem Radius von R50, wie die erste Freifläche 17, allerdings mit versetztem Mittelpunkt. Sie weist aber keine Neigung in Richtung auf die die Kerbe 19 aufweisende Seitenfläche des Fräsbalkens 14 hin auf wie die erste Freifläche 17. Analog zu der Stütz- und Führungsfläche 22 ist auf der in Fig. 5 nicht dargestellten, entgegengesetzten Seitenfläche des Fräsbalkens 14 eine an die zweite Freifläche 17' angrenzende Stütz- und Führungsfläche in identischer Weise ausgebildet.

Bei dem Fräsbalken sind somit in einer seiner Seitenflächen die kerbenförmige Ausnehmung 19 und in der gegenüberliegenden Seitenfläche die Spanfläche 16 sowie in den dazu jeweils senkrechten Seitenflächen gegenüberliegend jeweils die erste Freifläche 17 und die Stütz- und Führungsfläche 22 und gegenüberliegend die zweite Freifläche 17' und die zweite Stütz- und Führungsfläche ausgebildet.

Im übrigen verläuft die Spanfläche 16 schräg auf die Längsachse des Fräsbalkens 14 zu, so dass sich im Bereich des Übergangs von den Freiflächen 17, 17' zu den Stützund Führungsflächen 22, der gleichzeitig mit der Position der kerbenförmigen Ausnehmung 19 zusammenfällt, eine deutliche Querschnittsverringerung des Fräsbalkens 14 einstellt.

Mit den die Schneidelementflächen 18, 21 aufweisenden Endbereichen wird der Fräsbalken 14 zwischen dem Oberteil 2 und dem Unterteil 3 klemmend und fixierend gehalten. Vorzugsweise sind dafür entsprechende Ausnehmungen in den Randbereichen von Oberteil 2 und Oberteil 3 ausgebildet.

Alle an dem Elektrodenfräskopf 1 angeordneten Flankenfräsmesser 9 und Fräsbalken 14 sind auswechselbar an dem Elektrodenfräskopf 1 befestigt.

In Ausgestaltung ist es möglich, zwei Flankenfräsmesser 9 vorzusehen, die diametral gegenüberliegend in dem Elektrodenfräskopf 1 angeordnet sind, wovon eines die in Bezug auf die Darstellung in der Fig. 1 nach oben gerichtete Anfasschneidkante 10 und das andere die in Bezug auf die Darstellung in der Fig. 1 nach unten gerichtete Anfasschneidkante 10' aufweist. Hierbei kann zusätzlich ein Fräsbalken 14 weiterhin vorgesehen sein. Es ist aber auch möglich, auf einen solchen zu verzichten. Insbesondere kann bei einem in Fig. 1 dargestellten Elektrodenfräskopf 1 auf einen Fräsbalken 14 verzichtet werden und lediglich ein Flankenfräsmesser 9 in dem Elektrodenfräskopf 1 angeordnet sein. Natürlich ist es auch möglich - ausschließlich oder zusammen mit einem Fräsbalken 14 - zwei Flankenfräsmesser 9 mit jeweils spiegelbildlich angeordneten Anfasschneidkanten 10a und 10a', so dass ein Flankenfräsmesser in der Aufnahme 4 und eines in der Aufnahme 4' schneidet, diametral gegenüberliegend oder im Umfang von oberer Elektrodenkappenaufnahme 4 und unterer Elektrodenkappenaufnahme 4' beabstandet voneinander an dem Elektrodenfräskopf 1 anzuordnen.

Auch muss nicht der Elektrodenfräskopf 1 insgesamt um die Achse A rotieren. Es ist auch möglich, dass lediglich die Elektrodenkappenaufnahmen 4, 4' mit den dort hinein wirkenden Anfasschneidkanten 10, 10' und/oder dem Balkenmesser bzw. Fräsbalken 14 rotieren. Natürlich ist es auch möglich, dass die Elektrode bzw. Elektrodenkappe 5 rotiert und der Elektrodenfräskopf 1 samt Aufnahmen 4, 4' fest steht.

Bei dem Ausführungsbeispiel sind das Flankenfräsmesser 9 und der Fräsbalken 14 senkrecht zueinander angeordnet. In nicht dargestellter Weise ist es aber auch möglich, dass zu dem Fräsbalken 14 fluchtend in dessen Längsrichtung ein Flankenfräsmesser 9 angeordnet ist. In nicht dargestellter Weise können in diesem Falle der Fräsbalken 14 und das Fräsmesser 9 einteilig ausgebildet sein. Hierbei bildet dann das Flankenfräsmesser 9 quasi das eine Ende des Fräsbalkens 14. Es ist natürlich auch möglich, dass sowohl bei der einteiligen Form als auch bei getrennter Ausführung von Fräsbalken 14 und Flankenfräsmesser 9 an jedem Längsende des Fräsbalkens 14 ein Flankenfräsmesser 9 angeordnet ist.

### Bezugszeichenliste

- 1: Elektrodenfräskopf
- 2: Oberteil
- 3: Unterteil
- 4: (obere) Elektrodenkappenaufnahme
- 4': (untere) Elektrodenkappenaufnahme
- 5: Elektrodenkappe
- 6: Stützfläche
- 6': Stützfläche
- 7: Führungsfläche
- 7': Führungsfläche
- 8: Einführfläche
- 8': Einführfläche
- 9: Flankenfräsmesser
- 10: Anfasschneidkante
- 10': Anfasschneidkante
- 10a: schneidaktiver Anfangspunkt
- 10a': schneidaktiver Anfangspunkt
- 11: Spitzenfläche
- 12: Zylinderfläche
- 13: Flankenfläche
- 14: Fräsbalken
- 15: Hauptschneide
- 15': Hauptschneide
- 16: Spanfläche
- 17: erste Freifläche
- 17': zweite Freifläche
- 18: Schneidelementfläche
- 19: Kerbe/kerbenförmige Ausnehmung
- 20: Spitze

- 21: Schneidelementfläche
- 22: Stütz- und Führungsfläche
- 23: höchster Punkt der Hauptschneide
- 24, 25, 25, 27: Fräsbalkenseitenflächen

- A: Rotationsachse
- B: Flankenfräsmesserlängsachse
- D₁: Durchmesser der Spitzenfläche der Elektrodenkappe
- D₂: Außendurchmesser der Elektrodenkappe
- α: Steigung der Stützfläche
- β, β': Steigung der Anfasschneidkante sowie der Stützfläche

## Patentansprüche

1. Elektrodenfräskopf (1) mit mindestens einer darin ausgebildeten, Stützflächen (6, 6') aufweisenden Elektrodenkappenaufnahme (4, 4') umfassend ein Oberteil (2), ein Unterteil (3) und mindestens ein zwischen Ober- und Unterteil (2, 3) klemmend gehaltenes, in die mindestens eine Elektrodenaufnahme (4, 4') hineinragendes und mindestens eine Flankenschneide aufweisendes Flankenfräsmesser (9),
**dadurch gekennzeichnet,**
**dass** die mindestens eine Flankenschneide eine Anfasschneidkante (10, 10') mit einer zum äußeren Rand der Aufnahme (4, 4') ansteigenden Neigung (β) von 20° ausbildet.

2. Elektrodenfräskopf nach Anspruch 1, **dadurch gekennzeichnet, dass** die mindestens eine Anfasschneidkante (10, 10') an einem schneidaktiven Anfangspunkt (10a, 10a') beginnend linear gerade mit zum äußeren Rand der Elektrodenkappenaufnahme (4, 4') ansteigender Neigung (β) von 20° verläuft.

3. Elektrodenfräskopf nach Anspruch 1 oder 2, **dadurch gekennzeichnet, dass** an dem Elektrodenfräskopf (1) mehrere Anfasschneidkanten (10, 10') bezüglich einer Ebene parallel zur Rotationsachse (A) des Elektrodenfräskopfes (1) oder einer Elektrode oder eine Elektrodenkappe (5) und/oder bezüglich einer Ebene senkrecht zur Rotationsachse (A) des Elektrodenfräskopfes (1) oder einer Elektrode oder einer Elektrodenkappe (5) spiegelsymmetrisch zueinander ausgebildet sind.

4. Elektrodenfräskopf nach einem der vorhergehenden Ansprüche, **dadurch gekennzeichnet, dass** an einem Flankenfräsmesser (9) zwei Anfasschneidkanten (10, 10') bezüglich einer Ebene senkrecht zur Rotationsachse (A) des Elektrodenfräskopfes (1) oder einer Elektrode oder einer Elektrodenkappe (5) spiegelsymmetrisch zueinander ausgebildet sind.

5. Elektrodenfräskopf nach einem der vorhergehenden Ansprüche, **dadurch gekennzeichnet, dass** mehrere Flankenfräsmesser (9) mit jeweils mindestens einer Anfasschneidkante (10, 10') an dem Elektrodenfräskopf (1) angeordnet sind, wobei mindestens eine Anfasschneidkante (10) der oberen Elektrodenkappenaufnahme (4) und mindestens eine Anfasschneidkante (10') der unteren Elektrodenkappenaufnahme (4') zugewandt ist.

6. Elektrodenfräskopf nach einem der vorhergehenden Ansprüche, **dadurch gekennzeichnet, dass** die Neigungen der mindestens einen Anfasschneidkante (10, 10') und der Stützfläche (6, 6') der zugeordneten Elektrodenkappenaufnahme (4, 4') die gleiche Steigung aufweisen.

7. Elektrodenfräskopf nach einem der vorhergehenden Ansprüche, **dadurch gekennzeichnet, dass** der Elektrodenfräskopf (1) einen Fräsbalken (14) aufweist und mindestens ein Flankenfräsmesser (9) fluchtend in dessen Längsrichtung angeordnet ist.

8. Elektrodenfräskopf nach einem der vorangehenden Ansprüche, **dadurch gekennzeichnet, dass** sich im wesentlichen zylindrische Führungsflächen (7, 7') an die Stützflächen (6, 6') anschließen.

9. Elektrodenfräskopf nach einem der vorangehenden Ansprüche, **dadurch gekennzeichnet, dass** die Stützflächen (6, 6') umlaufend in Teilbereichen der Aufnahme (4) ausgebildet sind.

10. Elektrodenfräskopf nach Anspruch 9, **dadurch gekennzeichnet, dass** die Stützflächen (6, 6') zum äußeren Rand der Aufnahme (4, 4') hin ansteigen.

11. Elektrodenfräskopf nach Anspruch 10, **dadurch gekennzeichnet, dass** die Anfraßschneidkante (10, 10') im wesentlichen in derselben Ebene wie die Stützflächen (6, 6') liegt.

12. Elektrodenfräskopf nach einem der vorhergehenden Ansprüche, **dadurch gekennzeichnet, dass** ein Fräsbalken (14) und mindestens ein Flankenfräsmesser (9) senkrecht zueinander angeordnet sind.

13. Elektrodenfräskopf nach einem der vorhergehenden Ansprüche, **dadurch gekennzeichnet, dass** mindestens ein Flankenfräsmesser (9) einteilig mit dem Fräsbalken (14) ausgebildet ist.

14. Elektrodenfräskopf nach einem der vorhergehenden Ansprüche, **dadurch gekennzeichnet, dass** der Fräsbalken (14) mindestens eine in seiner seinen Hauptschneidkanten (15, 15') abgewandten Seitenfläche ausgebildete Kerbe (19) aufweist, in die die Spitze (20) mindestens eines oder des mindestens einen Flankenfräsmessers (9) einführbar ist.

15. Elektrodenfräskopf nach Anspruch 10, **dadurch gekennzeichnet, dass** die Spitze (20) eines Flankenfräsmessers (9) bis zur formschlüssigen Anlage an die Seitenflächen der Kerbe (19) in diese einführbar ist.

16. Elektrodenfräskopf nach einem der vorhergehenden Ansprüche, **dadurch gekennzeichnet, dass** mindestens ein Flankenfräsmesser (9) radial unterschiedlich, jeweils einen anderen radialen Abstand des oder der schneidaktiven Anfangspunkte(s) (10a, 10a') zur Rotationsachse (A) des Elektrodenfräskopfes (1) oder einer Elektrode oder Elektrodenkappe (5) einstellend, an dem Elektrodenfräskopf (1) positionierbar ist.

17. Elektrodenfräskopf nach einem der vorhergehenden Ansprüche, **dadurch gekennzeichnet, dass** der jeweilige schneidaktive Anfangspunkt (10a, 10a') eines Flankenfräsmessers (9) und der höchste Punkt (23) der jeweiligen zugeordneten Hauptschneide (15, 15') eines Fräsbalkens (14) in einer senkrecht zur Rotationsachse (A) des Elektrodenfräskopfes (1) oder einer Elektrode oder Elektrodenkappe (5) aufgespannten Ebene liegen.

18. Flankenfräsmesser (9), das in einem Elektrodenfräskopf (1), der mindestens eine Elektrodenkappenaufnahme (4, 4') mit mindestens einer darin ausgebildeten Stützfläche (6, 6') aufweist, zwischen einem Oberteil (2) und einem Unterteil (3) klemmend gehalten derart anordenbar ist, dass mindestens eine Flankenschneide des Flankenfräsmessers (9) in die mindestens eine Elektrodenkappenaufnahme (4, 4') hineinragt,
**dadurch gekennzeichnet,**
**dass** das Flankenfräsmesser (9) mindestens eine Anfasschneidkante (10, 10') aufweist, die von einem schneidaktiven Anfangspunkt (10a, 10a') zu einem Endbereich mit einer ansteigenden Neigung (β) von 20° zur Flankenfräsmesserlängsachse (B) verläuft.

19. Flankenfräsmesser (9) nach Anspruch 18, **dadurch gekennzeichnet, dass** die mindestens eine Anfasschneidkante (10, 10') an einem schneidaktiven Anfangspunkt (10a, 10a') beginnend linear gerade mit zum entgegengesetzten Ende des Flankenfräsmessers (9) ansteigender Neigung (β) von 20° verläuft.

20. Flankenfräsmesser (9) nach Anspruch 18 oder 19, **dadurch gekennzeichnet, dass** an einem Flankenfräsmesser (9) zwei Anfasschneidkanten (10, 10') bezüglich der Flankenfräsmesserlängsachse (B) spiegelsymmetrisch zueinander ausgebildet sind.

21. Flankenfräsmesser (9) nach einem der Ansprüche 18 bis 19, **dadurch gekennzeichnet, dass** es einteilig mit einem Fräsbalken (14) ausgebildet ist.
